# EUROPEAN PATENT SPECIFICATION

(11) **EP 3 380 404 B1**
(45) Date of publication and mention of the grant of the patent: **06.05.2020**
(21) Application number: 16798267.7
(22) Date of filing: 18.10.2016
(51) Int. Cl.: B65B 25/06, B65D 65/18, B65D 65/24, B65D 85/60, A23G 1/50, A23G 3/50, B65D 75/52

(54) **PACKAGED FOOD PRODUCT AND METHOD FOR PACKAGING FOOD PRODUCT**
VERPACKTES LEBENSMITTEL UND VERFAHREN ZUM VERPACKEN VON LEBENSMITTELN
PRODUIT ALIMENTAIRE EMBALLÉ ET PROCEDE D'EMBALLAGE D'UN PRODUIT ALIMENTAIRE

(30) Priority: 24.11.2015 GB 201520742
(43) Date of publication of application: 03.10.2018
(73) Proprietor: Kraft Foods Schweiz Holding GmbH, 6300 Zug (CH)
(72) Inventor: ANDREWS, Richard, Bournville Birmingham B30 2LU (GB); DOWN, Matthew, Bournville Birmingham B30 2LU (GB)
(74) Representative: Wilson Gunn
(86) International application number: PCT/IB2016/001544
(87) International publication number: WO 2017/089877

(56) References cited:
- EP-B1- 2 427 390
- EP-B1- 2 736 815
- WO-A1-2011/158014

## Description

### Technical Field of the Invention

The present invention relates to packaging. It relates in particular to flow-wrap packages and methods and to combinations of packaged products and flow-wrapped packages.

### Background to the Invention

Products such as confectionary and other snack type food products are often purchased by consumers on impulse. Accordingly, companies devote considerable resources to developing distinctive products which will appeal visually to consumers and to developing packaging which complements the product and/or which allows the unique qualities of the product to be brought to the attention of potential consumers visually.

One known packaging arrangement is commonly referred to as a flow-wrap package. This type of package is produced using a flow-wrap method in which a film of flexible material is supplied in a roll to package a number of product pieces in a substantially continuous process. In a horizontal flow-wrap method, product pieces are introduced along an in-feed conveyor. The material is fed from a roll through a machine which folds it about each product piece in turn. Opposing longitudinal side edges of the wrapper are brought into contact inner face to inner face and bonded together to form a longitudinal fin seal and the material is crimped at either end of each product piece to form transverse end seals. The material is cut transversely to separate each formed package in turn from the remainder of the film.

Flow-wrapped packages typically conform to the overall shape of the product piece and so packages for similarly shaped products, such as confectionery or other snack type bars, will have a similar overall appearance. In order to distinguish one product from another, there is a heavy reliance on the graphics applied to the packaging but even with different graphics it can be hard for one packaged product to stand out in a crowded display area.

It is also known to provide packaging which includes a see-through window in an otherwise opaque material. WO 2011 158014 A1 for example discloses a method of manufacturing a laminated packaging material having a window. The material can be used to produce flow-wrapped packages. The window allows a part of the product piece inside to be viewed whilst the opaque area carries graphics in the usual way. The window draws a potential consumer's attention to the appearance of the product piece and is particularly effective where the appearance of the product piece is unusual or unexpected in some way. However, it has been found that the interior surface of a window can become smeared, especially when flow-wrapping a food product such as chocolate which contains fat.

There is a need then for packaging and for a packaging/product combination which overcomes or at least mitigates the problems of the prior art arrangements.

There is also a need for packaging and for a packaging/product combination which provides alternative or improved scope for adding visual attractiveness for potential consumers.

There is also a need for a method of packaging a product piece which overcomes or at least mitigates the problems of the prior art arrangements and/or which provides alternative or improved scope for adding visual attractiveness for potential consumers.

### Summary of the Invention

According to a first aspect of the invention, there is provided a combination of an edible foodstuff product piece enclosed in a wrapper of flexible material, wherein the wrapper is generally opaque but comprises a see-through window, the window being in registration with a region of the product piece, the product piece having at least one raised formation located outside said region and which engages with the inner surface of an opaque portion of the wrapper outside of the window so that the interior surface of the window is held in a spaced relationship with said region of the product piece.

The raised portion holds the inner surface of the window clear of the product piece. This can help prevent the window from becoming smeared. Since the raised formation is provided as part of the product piece, no additional features need be added to the packaging and conventional packaging techniques can be used to apply the wrapper to the product piece.

The at least one raised formation may comprise a ridge extending about at least part of the periphery of the product piece.

The at least one raised formation may include peripheral ridges extending along each of two opposed sides of the product piece. In which case, the ridges may extend generally in a feed direction of the wrapper. Said region of the product piece may be part of a generally rectangular face of the product piece and the peripheral ridges may extend along opposed sides of the face. A further peripheral ridge may extend along at least one of two further sides of the product piece, the height of at least one of the further peripheral ridge(s) being less that the height of said peripheral ridges.

Said region of the product piece in registration with the window may be profiled in a non-planar manner, in which case, the top of each formation may extend above the highest peak in said region. The formations may have a height X which is greater than the highest point of any shape defined in the profiled region. The height X may be measured perpendicularly from the plane of the inner surface of the wrapper opposite the window or from the plane of a face of the product piece opposite the profiled region.

Each raised formation may be located transversely to one side of the window.

In an embodiment, the product piece has an aperture in said region in registration with the window, the inner surface of a portion of the wrapper opposite the window carrying a first graphic image, the arrangement being such that the first graphic image can be seen from outside the wrapper through the window and the aperture. A shaped item may be located within the aperture. The shaped item and said first graphic image may be related such that they produce a combined visual representation having visual depth when viewed together. A second graphic image may be provided on the window and/or on the wrapper surrounding the window, the second graphic image being related to the first graphic image so as to form a combined visual representation with visual depth when viewed together. In an embodiment, the first and second graphic images and the shaped item are all in registration and related so as to form a combined visual representation with visual depth when viewed together. The shaped item may be a profiled part of the product piece.

The wrapper may be closed by means of a longitudinal seam and by a transverse seam at either end.

The product piece may be a moulded product piece.

In accordance with a second aspect of the invention, there is provided a method packaging an edible foodstuff product piece, the method comprising:
a. providing a wrapper of flexible material which is generally opaque but comprises a see-through window;
b. providing a product piece having at least one raised formation located outside of a region of the product piece which is to lie in registration with the window in the completed packaging;
c. enclosing the product piece in the wrapper and bringing the window into registration with said region of the product piece with the raised formation engaging an inner surface of an opaque portion of the wrapper outside of the window so that, the interior surface of the window is held in a spaced relationship with said region of the product piece.

The step of enclosing the product piece in the wrapper may be carried out using a horizontal flow-wrapping machine and the at least one formation may be positioned so that it does not contact the inner surface of the window during the wrapping process.

Each raised formation may be offset transversely to one side of the window.

### Detailed Description of the Invention

In order that the invention may be more clearly understood embodiments thereof will now be described, by way of example only, with reference to the accompanying drawings, of which:
Figure 1 is a perspective view of a chocolate tablet forming part of a combination in accordance with a first aspect of the invention;
Figure 2 is a cross sectional view through the chocolate tablet of Figure 1 taken on line A-A;
Figure 3 is a perspective view of an end region of a combination in accordance with an aspect of the present invention which incorporates the chocolate tablet of Figure 1;
Figure 4 is a plan view of a second embodiment of a combination in accordance with an aspect of the invention, the combination comprising an alternative chocolate tablet and a flow-wrapped package;
Figure 5 is a plan view of a third embodiment of a combination in accordance with an aspect of invention, the combination comprising a further alternative chocolate tablet and a flow-wrapped package; and
Figure 6 is an exploded view of parts of different layers in the combination of Figure 5.

In the various embodiments described below, features in common will be given the same reference numeral but increased by 100 in each case.

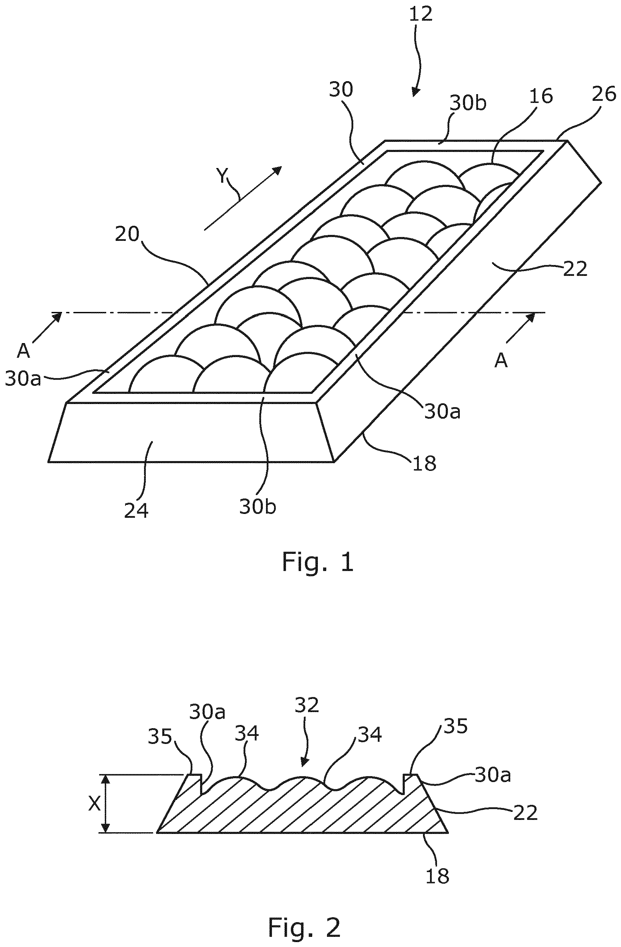

With reference initially to Figures 1 to 3, a combination 10 of a product piece 12 and a wrapper 14 enclosing the product piece in accordance with an aspect of the present invention will be described.

In the present embodiment, the product piece 12 is a moulded chocolate bar. However, the product piece 12 could be any edible foodstuff item, such as an alternative snack bar or a cheese product. As illustrated in Figures 1 and 2, the chocolate bar 12 has a generally rectangular block shape having a front face 16, a back face 18, a pair of opposed longitudinal side faces 20, 22 and a pair of opposed transverse end faces 24, 26. The longitudinal side faces 20, 22 taper inwardly from the back face 18 toward the front face 16 so that the front face 16 is narrower than the back face 18 giving the bar a generally isosceles trapezoid shape when viewed from one end. The transverse end faces 24, 26 could also taper inwardly in a direction from the back face 18 to the front face 16.

Whilst a generally rectangular chocolate bar 12 is disclosed in the present embodiment, it should be appreciated the product piece 12 could have any suitable shape provided that it can be packaged in a wrapper, especially by means of a horizontal flow-wrap method and apparatus. The product piece 12 could, for example, be generally block shaped, triangular prism shaped or it could be cylindrical (including both right circular and right elliptical/oval cylinders). The product piece 12 could also be irregularly shaped.

The chocolate bar 12 is moulded so as to define a peripheral ridge 30 extending about the side and end edges of its front face 16. The peripheral ridge 30 has longitudinal side portions 30a which extend along the longitudinal side edges of the front face and transverse end portions 30b which extend along the transverse end edges of the front face.

In a central region 32 within the peripheral ridge 30, the front face 16 of the bar is moulded in a non-planar manner to define a series of rounded shapes 34 that imitate the appearance of bubbles in the chocolate. The other faces of the bar are generally planar, though this is not essential. The upper surface 35 of the peripheral ridge 30 extends above the highest point of any of the rounded shapes 34 in the central region. Thus the ridge has a height X greater than the highest point of any of the rounded shapes 34 in the central region, where height X is measured in this case perpendicularly from the planar surface of the back face 18 of the chocolate bar 12 or perpendicularly from the plane of the inner surface of the wrapper opposite the window. Alternatively, X can also be considered the depth of the chocolate bar and it can be said that the peripheral ridge 32 has a greater depth X than the central region 30.

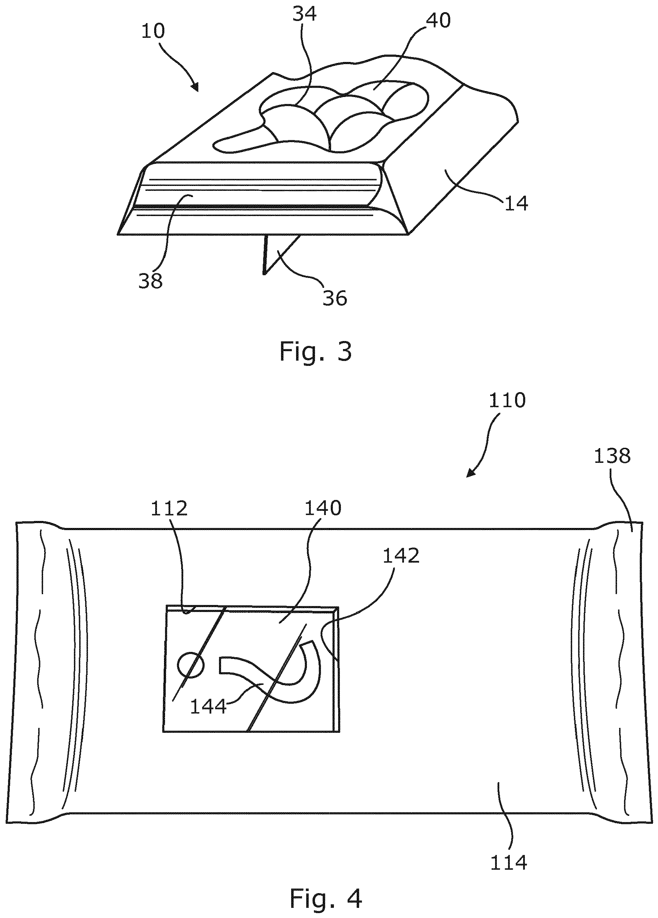

With reference to Figure 3, the chocolate bar 12 is shown encased in a wrapper 14 to form the combination 10. The wrapper 14 is folded about the chocolate bar 12 using a horizontal flow-wrap method and apparatus as is well known in the art. Longitudinal side edge regions of the wrapper are sealed together to form a longitudinal fin seam 36. Opposed surfaces of the material which project beyond the bar 12 at either end are sealed together to form transverse end seams 38 in a known manner.

The seams 36, 38 may be formed using any suitable methods including but not limited to use of an adhesive, such as a cold seal adhesive, to bond the opposing surfaces of the wrapper material or by fusing the material together to form a welded seal. There are a number of known techniques for producing welded seals including heat sealing and ultra sonic sealing.

The wrapper 14 has a see-through window 40 which overlies part of the profiled central region 32 of the front face 16 of the chocolate bar 12 so that the bubble shapes 34 can be seen through the window 40. The remainder of the wrapper 14 is opaque and carries graphics and text in the usual manner.

The wrapper 14 can be formed in any suitable manner from any suitable materials. Typically, the wrapper is made from a laminated material having an inner laminate structure for positioning proximal to the product and an outer laminate structure for positioning distal from the product. One of the inner and outer laminate structures is opaque whilst the other is not and a region of the opaque laminate structure is removed to form the window. The laminated material may be manufactured in accordance with the teaching in WO 2011 158014 A1, although this is not essential. The reader should refer to WO 2011 158014 A1 for further details, the contents of which are hereby incorporated by reference.

It is envisaged that in most embodiments the non-opaque laminate structure will be substantially transparent so that the contents of the package can be seen clearly through the window 40. However, in some embodiments the window may be translucent and could, for example, have a frosted effect but through which the contents can still be seen.

A variety of materials can be used for the wrapper 14, including polymeric materials which may be thermoplastic materials such as polyethylene terephthalate (PET), for example. However, other materials can also be used including paper based materials and metallic foils, particularly in the opaque laminate structure. Depending on the types of materials used, the known packages may be substantially gas and moisture impervious. However, for some food and confectionery applications, a hermitically sealed package is not desirable.

The combination 10 is configured so that when the wrapper 14 is fully formed and sealed about the bar 12, the window 40 is positioned over the central region 32 inside the peripheral ridge and so that the peripheral ridge 30 contacts the wrapper only on opaque regions outside the window 40. As the peripheral ridge 30 is higher than the shaped profiles 34 in the central region, and due to the tautness of the wrapper, the window 40 of the wrapper is held clear of the product. This reduces the chances of the window 40 becoming smeared and compromising the aesthetic effect of the packaging.

Whilst it may be possible to depress the window 40 into contact with the chocolate bar 12, with careful handling this should not generally happen prior to display at a retail outlet. If a number of the combinations 10 are packaged face to face in a stack for example, the lower face of one combination 10 in the stack will be supported on the outer peripheral ridge region of an adjacent combination 10 so that the window 40 of the adjacent combination is not depressed into contact with the product.

In the present embodiment, the window 40 is held away from the product 12 by means of the peripheral ridge 30 which extends about all sides of the chocolate bar but this need not be the case. The window 40 could be held away from the product by any suitably shaped formations located on or about the front face 16 that have a height greater than the height of the product piece in the region in registration with the window and which formations contact opaque regions of the wrapper outside of the window 40. For example, the window 40 need not be held clear by means of a ridge that extends fully about the periphery of the front face 16 but by ridge portions that extend only about part of the periphery of the front face.

Preferably, the formations 30 which hold the window 40 clear are arranged so that they are not contacted by the window 40 as the wrapper 14 is folded about the chocolate bar 12, as this might also result in the window being smeared. When the wrapper 14 is wrapped about the product piece 12, there is generally some relative movement between the two in the feed direction. In the present embodiment, the feed direction, as indicated by the arrow Y, is parallel to the length of the chocolate bar 12. The feed direction Y can also be considered as the direction between the transverse end seems 38 of the formed wrapper. Such relative movement can result in the wrapper siding across the bar in the longitudinal feed direction Y and could result in the window 40 being smeared due to contact with, say, the transverse ridge portion 30b at the leading end of the bar as it is fed into the wrapping machine. To prevent the window 40 being smeared whilst the wrapper 14 is folded about the bar, the formations can be located so as to contact the wrapper only at regions which lie to either transverse side of the widow 40, when considered in relation to the longitudinal feed direction Y. For example, at least the transverse ridge portion 30b at the leading end of the bar 12 can be omitted or may be lower than the longitudinal ridge portions 30a so that it does not contact the window during the wrapping process. In one embodiment, the chocolate bar 12 is modified so as to have longitudinal peripheral ridge regions 30a extending along the longitudinal side edges of the front face only, with no transverse ridge portions 30b extending along the transverse side edges.

It should also be understood that the formations which hold the widow 40 clear of the product piece need not be peripheral ridge portions but could be any suitable shaped and located formations. The formations could be configured to blend in with the overall profile of the moulded front face. For example, in the present embodiment where the front face is moulded with rounded shapes 34 to imitate the appearance of bubbles, the formations could take the form of similar rounded shapes but which have a greater height than the rounded shapes over which the window 40 is positioned. These could be located to the sides of the front face so as to support the wrapper either side of the window 40 in place of the longitudinal ridge portions 30a. In other arrangements, recesses or channels can be formed in a face of the product piece which the window overlies to allow the widow 40 to be positioned during the wrapping process without contacting the product piece 12.

The window 40 can be any suitable shape and may be shaped to correspond with the features of the moulded surface. In the embodiment illustrated, the window has curved edges which correspond with and reflect the bubble formations of the profiled part of the chocolate bar 12. Graphics may be applied to the opaque regions of the wrapper about the window 40 and/or to the window itself that are associated with or reflect the shape or image of the profiled region to create a combined image or visual representation.

It will be appreciated that the profiling of the region of the bar over which the widow 40 is to lie can take many forms and may be associated in some way with the nature of the product or it's branding. The profiling may comprise the provision of an image moulded or engraved or otherwise formed in a surface of the bar 12 for example.

Figure 4 illustrates a further embodiment of a combination in accordance with and aspect the invention. In the combination 110 of this embodiment, the chocolate bar 112 defines an aperture 142 which is aligned with the window 140 in the completed package. The interior surface of the wrapper 114 opposite the window 140 is printed or otherwise provided with a graphic image 144 which can be seen through the widow 140 and the aperture 142. The graphic image 144 could be a message or other design. In a modification which is not shown, the window region 140 of the wrapper and/or the opaque region of the wrapper surrounding the window 140 may also be printed on or otherwise provided with a further graphic image which is in register with and/or otherwise associated with the graphic image 144 on the interior of the wrapper opposite the window so that the two graphic images form a combined image or visual representation having a visual depth. Alternatively, a second window may be provided in the rear face of the wrapper in registration with the first window 140 and the aperture 142 to create a package combination which the consumer can see right through. In accordance with the invention, the chocolate bar 112 in this embodiment may be moulded or otherwise shaped to have formations which engage opaque regions of the wrapper 114 to hold the/or each window 140 clear of the chocolate bar as in the first embodiment.

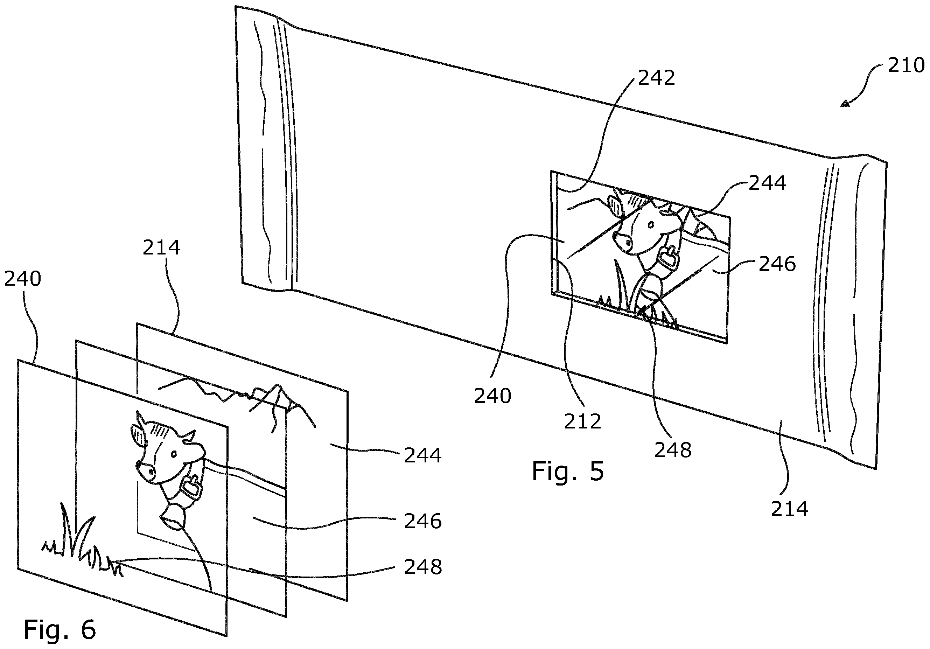

Figures 5 and 6 illustrate a further modification to the previous embodiment in which the chocolate bar 212 includes a shaped item or sculpture 246 located in the aperture 242 but which does not fill the aperture so that at least part of the inner surface of the wrapper opposite the window 240 can be seen through the window. The shaped item 246 may be a profiled part of the product piece. The inner surface of the wrapper 214 opposite the window 240 is printed on or otherwise provided with a graphic image 244 which is in registration with and which relates to the shaped item 246 so that when viewed through the window, the shaped item 246 and the graphic image 244 create a combined image with visual depth. To increase the visual effect, a second graphic image 248 can be applied to the window region 240 which is in registration with the shaped item 246 and the first graphic image 244 to produce a combined image with increased visual depth. In the example shown, the shaped item 246 has the appearance of a cow, the first graphic image 244 provides a background view of mountains seen behind the cow and the second graphic image 248 provides a foreground image of grass in front of the cow. When viewed together, the first and second graphic images 244, 248 and the shaped item 246 combine to form a 3-dimensional representation of a cow standing in a grass field in front of a backdrop of mountains. In accordance with the invention, the chocolate bar 212 in this embodiment may also be moulded to have formations which engage opaque regions of the wrapper to hold the window 240 clear of the chocolate bar as in the first embodiment.

Whilst the invention has been described in relation to a packaging combination comprising chocolate bar as the packaged product, the teachings can be applied to packaging for a range of products, especially foodstuff products and more especially foodstuff products that can be moulded or engraved to form images in the product.

The above embodiments are described by way of example only. Many variations are possible without departing from the scope of the invention as defined in the appended claims.

## Claims

1. A combination (10; 110; 210) of an edible foodstuff product piece (12; 112; 212) enclosed in a wrapper (14; 114; 214) of flexible material, wherein the wrapper is generally opaque but comprises a see-through window (40; 140; 240), the window being in registration with a region (32) of the product piece, **characterised in** the product piece having at least one raised formation (30a) located outside said region and which engages with the inner surface of an opaque portion of the wrapper outside of the window so that the interior surface of the window is held in a spaced relationship with said region of the product piece.

2. A combination (10; 110; 210) as claimed in claim 1, in which the at least one raised formation comprises a ridge (30a) extending about at least part of the periphery of the product piece (12).

3. A combination (10; 110; 210) as claimed in claim 2, in which a peripheral ridge (30a) extends along each of two opposed sides of the product piece and wherein the ridges (30a) extend generally in a feed direction of the wrapper.

4. A combination (10; 110; 210) as claimed in claim 3, in which a further peripheral ridge (30b) extends along at least one of each of two further sides of the product piece, the height of at least one of the further peripheral ridge(s) being less that the height of said peripheral ridges (30a).

5. A combination (10; 110; 210) as claimed in any one of the previous claims, wherein said region (32) of the product piece in registration with the window (40; 140; 240) is profiled in a non-planar manner, the top of each formation (30a) extending above the highest peak in said region (32).

6. A combination (10; 110; 210) as claimed in any one of the previous claims, wherein each raised formation (30a) is located transversely to one side of the window (40; 140; 240).

7. A combination (110; 210) as claimed in any one of the previous claims, wherein the product piece (112; 212) has an aperture (142; 242) in said region in registration with the window (140; 240), the inner surface of a portion of the wrapper opposite the window carrying a first graphic image (144; 244), the arrangement being such that the first graphic image (144; 244) can be seen from outside the wrapper through the window and the aperture.

8. A combination (210) as claimed in claim 7, in which a shaped item (246) is located within the aperture (242).

9. A combination (210) as claimed in claim 8, in which the shaped item (246) and said first graphic image (244) are related such that they produce a combined visual representation having visual depth when viewed together.

10. A combination (210) as claimed in any one of claims 7 to 9, wherein a second graphic image (248) is provided on the window (240) and/or on the wrapper surrounding the window, the second graphic image being related to the first graphic image (244) so as to form a combined visual representation with visual depth when viewed together.

11. A combination (210) as claimed in claim 10 when dependent on claim 8, wherein the first and second graphic images (244, 248) and the shaped item (246) are all in registration and related so as to form a combined visual representation with visual depth when viewed together.

12. A combination (210) as claimed in claim 8, or any one of claims 9 to 11 when dependent on claim 8, wherein the shaped item (246) is a profiled part of the product piece (212).

13. A method for packaging an edible foodstuff product piece (12; 112; 212), the method comprising:
a. providing a wrapper (14; 114; 214) of flexible material which is generally opaque but comprises a see-through window (40; 140; 240);
b. providing a product piece (12; 112; 212) having at least one raised formation (30a) located outside of a region of the product piece (32) which is to lie in registration with the window in the completed packaging;
c. enclosing the product piece in the wrapper and bringing the window (40; 140; 240) into registration with said region (32) of the product piece, with the raised formation (30a) engaging an inner surface of an opaque portion of the wrapper outside of the window to hold the interior surface of the window in a spaced relationship with said region of the product piece.

14. A method as claimed in claim 13, in which the step of enclosing the product piece (12; 112; 212) in the wrapper (14; 114; 214) is carried out using a horizontal flow-wrapping machine and the at least one formation (30a) is positioned so that it does not contact the inner surface of the window during the wrapping process.

15. A method as claimed in claim 14, wherein each raised formation (30a) is offset transversely to one side of the window (40; 140; 240).

## Patentansprüche

1. Kombination (10; 110; 210) aus einem essbaren Lebensmittelproduktstück (12; 112; 212), das in einer Hülle (14; 114; 214) aus flexiblem Material eingeschlossen ist, wobei die Hülle im Allgemeinen undurchsichtig ist, aber ein durchsichtiges Fenster (40; 140; 240) umfasst, wobei das Fenster mit einem Bereich (32) des Produktstücks in Deckung ist, **dadurch gekennzeichnet, dass** das Produktstück mindestens eine erhöhte Ausformung (30a) außerhalb dieses Bereichs aufweist und diese mit der inneren Oberfläche von einem undurchsichtigen Teil der Hülle außerhalb des Fensters in Eingriff gelangt, so dass die Innenfläche des Fensters in einer beabstandeten Beziehung zu dem Bereich des Produktstücks gehalten wird.

2. Kombination (10; 110; 210) nach Anspruch 1, wobei die mindestens eine erhöhte Ausformung einen Grat (30a) umfasst, der sich um mindestens einen Teil des Umfangs des Produktstücks (12) erstreckt.

3. Kombination (10; 110; 210) nach Anspruch 2, wobei sich ein Umfangsgrat (30a) entlang jeder von zwei entgegengesetzten Seiten des Produkts erstreckt und wobei sich die Grate (30a) im Allgemeinen in einer Zuführrichtung der Hülle erstrecken.

4. Kombination (10; 110; 210) nach Anspruch 3, wobei sich eine weiterer Umfangsgrat (30a) entlang mindestens einer von jeder der zwei weiteren Seiten des Produktstücks erstreckt, wobei die Höhe des mindestens einen weiteren Umfangsgrats geringer ist als die Höhe der Umfangsgrate (30a).

5. Kombination (10; 110; 210) nach einem der vorstehenden Ansprüche, wobei der Bereich (32) des Produktstücks, der in Deckung mit dem Fenster (40; 140; 240) ist, ein unebenes Profil aufweist, wobei die Oberseite jeder Ausformung (30a) sich über die höchste Spitze in dem Bereich (32) hinaus erstreckt.

6. Kombination (10; 110; 210) nach einem der vorstehenden Ansprüche, wobei jede erhöhte Ausformung (30a) quer zu einer Seite des Fensters (40; 140; 240) angeordnet ist.

7. Kombination (110; 210) nach einem der vorstehenden Ansprüche, wobei das Produktstück (112; 212) eine Öffnung (142; 242) in dem Bereich aufweist, der mit dem Fenster (140; 240) in Deckung ist, wobei die Innenfläche eines Abschnitts der Hülle gegenüber dem Fenster ein erstes grafisches Bild (144; 244) aufweist, wobei die Anordnung derart ist, dass das erste grafische Bild (144; 244) von außerhalb der Hülle durch das Fenster und die Öffnung gesehen werden kann.

8. Kombination (210) nach Anspruch 7, wobei ein geformter Gegenstand (246) innerhalb der Öffnung (242) angeordnet ist.

9. Kombination (210) nach Anspruch 8, wobei der geformte Gegenstand (246) und das erste grafische Bild (244) so miteinander in Beziehung stehen, dass sie eine kombinierte visuelle Darstellung erzeugen, die bei gemeinsamer Betrachtung eine visuelle Tiefe aufweist.

10. Kombination (210) nach einem der Ansprüche 7 bis 9, wobei ein zweites grafisches Bild (248) auf dem Fenster (240) und/oder auf der das Fenster umgebenden Hülle vorgesehen ist, wobei das zweite grafische Bild mit dem ersten grafischen Bild (244) so in Beziehung steht, dass sie eine kombinierte visuelle Darstellung bilden, die bei gemeinsamer Betrachtung eine visuelle Tiefe aufweist.

11. Kombination (210) nach Anspruch 10, sofern abhängig von Anspruch 8, wobei das erste und das zweite grafische Bild (244, 248) und der geformte Gegenstand (246) alle miteinander in Deckung sind und so miteinander in Beziehung stehen, dass sie eine kombinierte visuelle Darstellung bilden, die bei gemeinsamer Betrachtung eine visuelle Tiefe aufweist.

12. Kombination (210) nach Anspruch 8 oder einem der Ansprüche 9 bis 11, sofern abhängig von Anspruch 8, wobei der geformte Gegenstand (246) Profilteil des Produktstücks (212) ist.

13. Verfahren zum Verpacken eines essbaren Lebensmittelproduktstücks (12; 112; 212), wobei das Verfahren Folgendes umfasst:
a. Bereitstellen einer Hülle (14; 114; 214) aus flexiblem Material, das allgemein undurchsichtig ist, aber ein durchsichtiges Fenster (40; 140; 240) umfasst;
b. Bereitstellen eines Produktstücks (12; 112; 212), das mindestens eine erhöhte Ausformung (30a) aufweist, die außerhalb eines Bereichs des Produktstücks (32) angeordnet ist, das in der vollständigen Verpackung in Deckung mit dem Fenster liegen soll;
c. Einschließen des Produktstücks in der Hülle und In-Deckung-Bringen des Fensters (40; 140;240) mit dem Bereich (32) des Produktstücks, wobei die erhöhte Ausformung (30a) eine Innenfläche eines undurchsichtigen Abschnitts der Hülle außerhalb des Fensters in Eingriff nimmt, um die Innenfläche des Fensters in einer beabstandeten Beziehung zu dem Bereich des Produktstücks zu halten.

14. Verfahren nach Anspruch 13, wobei der Schritt des Einschließens des Produktstücks (12; 112; 212) in der Hülle (14; 114; 214) unter Verwendung einer horizontalen Schlauchbeutelmaschine durchgeführt wird und die mindestens eine Ausformung (30a) so positioniert ist, dass sie während des Verpackungsvorgangs nicht mit der Innenfläche des Fensters in Kontakt kommt.

15. Verfahren nach Anspruch 14, wobei jede erhöhte Ausformung (30a) quer zu einer Seite des Fensters (40; 140; 240) versetzt ist.

## Revendications

1. Combinaison (10 ; 110 ; 210) d'une pièce de produit alimentaire comestible (12 ; 112 ; 212) enfermée dans une enveloppe (14 ; 114 ; 214) de matériau flexible, dans laquelle l'enveloppe est généralement opaque, mais comprend une fenêtre transparente (40 ; 140 ; 240), la fenêtre étant en alignement avec une région (32) de la pièce de produit, **caractérisée en ce que** la pièce de produit a au moins une formation surélevée (30a) située à l'extérieur de ladite région et qui vient en prise avec la surface interne d'une partie opaque de l'enveloppe à l'extérieur de la fenêtre de sorte que la surface intérieure de la fenêtre est maintenue dans une relation espacée avec ladite région de la pièce de produit.

2. Combinaison (10 ; 110 ; 210) selon la revendication 1, dans laquelle l'au moins une formation surélevée comprend une crête (30a) s'étendant sur environ au moins une partie de la périphérie de la pièce de produit (12).

3. Combinaison (10 ; 110 ; 210) selon la revendication 2, dans laquelle une crête périphérique (30a) s'étend le long de chacun parmi deux côtés opposés de la pièce de produit et dans laquelle les crêtes (30a) s'étendent généralement dans une direction d'alimentation de l'enveloppe.

4. Combinaison (10 ; 110 ; 210) selon la revendication 3, dans laquelle une crête périphérique supplémentaire (30b) s'étend le long d'au moins l'un parmi chacun des deux autres côtés de la pièce de produit, la hauteur d'au moins l'une des crête(s) périphérique(s) supplémentaire(s) étant inférieure à la hauteur desdites crêtes périphériques (30a).

5. Combinaison (10 ; 110 ; 210) selon l'une quelconque des revendications précédentes, dans laquelle ladite région (32) de la pièce de produit en alignement avec la fenêtre (40 ; 140 ; 240) est profilée d'une manière non plane, le sommet de chaque formation (30a) s'étendant au-dessus du pic le plus élevé dans ladite région (32).

6. Combinaison (10 ; 110 ; 210) selon l'une quelconque des revendications précédentes, dans laquelle chaque formation surélevée (30a) se situe transversalement à un côté de la fenêtre (40 ; 140 ; 240).

7. Combinaison (110 ; 210) selon l'une quelconque des revendications précédentes, dans laquelle la pièce de produit (112 ; 212) a une ouverture (142 ; 242) dans ladite région en alignement avec la fenêtre (140 ; 240), la surface interne d'une partie de l'enveloppe opposée à la fenêtre portant une première image graphique (144 ; 244), l'agencement étant tel que la première image graphique (144 ; 244) peut être vue depuis l'extérieur de l'enveloppe à travers la fenêtre et l'ouverture.

8. Combinaison (210) selon la revendication 7, dans laquelle un article mis en forme (246) se situe au sein de l'ouverture (242).

9. Combinaison (210) selon la revendication 8, dans laquelle l'article mis en forme (246) et ladite première image graphique (244) sont apparentés de telle sorte qu'ils produisent une représentation visuelle combinée ayant une profondeur visuelle lorsqu'on les observe ensemble.

10. Combinaison (210) selon l'une quelconque des revendications 7 à 9, dans laquelle une deuxième image graphique (248) est fournie sur la fenêtre (240) et/ou sur l'enveloppe entourant la fenêtre, la deuxième image graphique se rapportant à la première image graphique (244) de façon à former une représentation visuelle combinée avec une profondeur visuelle lorsqu'on les observe ensemble.

11. Combinaison (210) selon la revendication 10 prise en dépendance de la revendication 8, dans laquelle les première et deuxième images graphiques (244, 248) et l'article mis en forme (246) sont tous en alignement et apparentés de façon à former une représentation visuelle combinée avec une profondeur visuelle lorsqu'on les observe ensemble.

12. Combinaison (210) selon la revendication 8, ou l'une quelconque des revendications 9 à 11 prise en dépendance de la revendication 8, dans laquelle l'article mis en forme (246) est une partie profilée de la pièce de produit (212).

13. Procédé d'emballage d'une pièce de produit alimentaire comestible (12 ; 112 ; 212), le procédé comprenant :
a. la fourniture d'une enveloppe (14 ; 114 ; 214) de matériau flexible qui est généralement opaque, mais comprend une fenêtre transparente (40 ; 140 ; 240) ;
b. la fourniture d'une pièce de produit (12 ; 112 ; 212) ayant au moins une formation surélevée (30a) située à l'extérieur d'une région de la pièce de produit (32) qui doit se trouver en alignement avec la fenêtre dans l'emballage terminé ;
c. l'enfermement de la pièce de produit dans l'enveloppe et le fait d'amener la fenêtre (40 ; 140 ; 240) en alignement avec ladite région (32) de la pièce de produit, avec la formation surélevée (30a) venant en prise avec une surface interne d'une partie opaque de l'enveloppe à l'extérieur de la fenêtre pour maintenir la surface intérieure de la fenêtre dans une relation espacée avec ladite région de la pièce de produit.

14. Procédé selon la revendication 13, dans lequel l'étape consistant à enfermer la pièce de produit (12 ; 112 ; 212) dans l'enveloppe (14 ; 114 ; 214) est effectuée en utilisant une machine d'emballage tubulaire horizontale et l'au moins une formation (30a) est positionnée de sorte qu'elle ne vient pas en contact avec la surface interne de la fenêtre pendant le processus d'enveloppement.

15. Procédé selon la revendication 14, dans lequel chaque formation surélevée (30a) est décalée transversalement vers un côté de la fenêtre (40 ; 140 ; 240).
